# FASCICULE DE BREVET EUROPEEN

(11) **EP 2 736 854 B1**
(45) Date de publication et mention de la délivrance du brevet: **20.11.2019**
(21) Numéro de dépôt: 12729438.7
(22) Date de dépôt: 11.06.2012
(51) Int. Cl.: C03B 5/04, C03B 5/235, C03B 5/237

(54) **INSTALLATION ET PROCEDE HYBRIDES DE FUSION DE VERRE**
HYBRIDANLAGE UND VERFAHREN ZUM SCHMELZEN VON GLAS
HYBRID PLANT AND METHOD FOR MELTING GLASS

(30) Priorité: 26.07.2011 EP 11305970
(43) Date de publication de la demande: 04.06.2014
(73) Titulaire: L'Air Liquide Société Anonyme pour l'Etude et l'Exploitation des Procédés Georges Claude, 75007 Paris (FR)
(72) Inventeur: JARRY, Luc, F-92190 Meudon (FR); TSIAVA, Rémi, F-91250 Saint German-les-Corbeil (FR)
(74) Mandataire: De Vleeschauwer, Natalie Y.L.D.
(86) Numéro de dépôt international: PCT/EP2012/060960
(87) Numéro de publication internationale: WO 2013/013875

(56) Documents cités:
- EP-A2- 1 338 848
- US-A- 5 203 859
- US-A1- 2010 081 103
- US-A1- 2011 104 628

## Description

La présente invention concerne des procédés et fours de fusion de verre avec récupération de chaleur.

Traditionnellement, les fours de fusion de verre utilisent comme comburant de l'air préchauffé par échange thermique avec les fumées issues du four, par exemple au moyen de récupérateurs ou échangeurs thermiques.

Il est connu de booster la tirée d'un tel four de fusion généralement chauffé par de l'aérocombustion au moyen d'un nombre d'oxybrûleurs supplémentaires. Un tel four de fusion utilisant à la fois de l'air et de l'oxygène comme comburants est également connu sous la dénomination « four hybride ».

Finalement, il est aussi connu d'utiliser principalement ou uniquement de l'oxycombustion pour le chauffage des fours de fusion de verre, notamment dans le domaine des fours de fusion de verre, ce qui permet de réduire fortement les émissions polluantes (NOx, poussières) et la consommation énergétique des fours.

US 5 203 859 divulgue un procédé de fusion de verre dans un four équipée de n brûleurs et une installation de préchauffage.

Selon un exemple particulièrement efficace d'un four de fusion à oxycombustion décrit dans US-A-6071116, le bilan économique du four est amélioré en préchauffant au moins un réactif (comburant et/ou combustible), et en particulier le comburant, en amont des brûleurs. Ceci est réalisé en plaçant un ou des échangeurs de chaleur sur le circuit des fumées en aval de la chambre de combustion du four dans le(s)quel(s) un fluide caloporteur sûr, tel que de l'air, du CO₂, de l'azote ou de la vapeur, est chauffé par échange thermique avec les fumées chaudes issues de la chambre de combustion et dans le(s)quel(s) le au moins un réactif est préchauffé par échange thermique avec le fluide caloporteur chauffé.

Dans le présent contexte, on comprend par « oxycombustion » une combustion utilisant un comburant riche en oxygène ayant une teneur en oxygène d'au moins 80%vol, par « aérocombustion » une combustion utilisant de l'air comme comburant et par « combustion enrichie » une combustion utilisant un comburant ayant une teneur en oxygène supérieure à la teneur en oxygène de l'air, mais plus basse que la teneur en oxygène du comburant en cas d'oxycombustion, c'est-à-dire une teneur en oxygène supérieure à 21%vol et inférieure à 80% vol.

Un avantage important de l'aérocombustion est la disponibilité illimitée du comburant. Parmi les désavantages de l'aérocombustion, il convient de mentionner la faible efficacité (du fait que l'azote présente dans l'air ne contribue pas à la combustion, mais doit être chauffé), les volumes importants de fumées (et donc des installations de tailles correspondantes) et les émissions importantes de NOx.

L'oxycombustion permet de remédier à ces inconvénients, mais nécessite une source dédiée et importante d'oxygène à proximité du four, telle qu'un pipeline d'oxygène une unité de séparation des gaz de l'air, voire un réservoir d'oxygène d'une capacité importante. Pour les fours à tirée élevée, seule la fourniture par pipeline ou unité de séparation des gaz de l'air est envisageable. Malgré la grande fiabilité desdites sources d'oxygène, une interruption de fourniture d'oxygène ne peut être exclue, par exemple suite à un problème technique ou logistique.

Étant donné les dommages majeurs et parfois irréversibles en cas d'arrêt de four suite à une interruption de fourniture d'oxygène, il est connu d'installer un réservoir de dépannage, souvent désigné par le terme anglais « backup », pour le stockage d'une réserve d'oxygène à proximité du four. Un tel « backup » permet une opération continue du four de fusion, souvent en mode dégradée, en cas de défaillance de la source habituelle d'oxygène. Toutefois et en particulier dans le cas des fours de fusion de tirée élevée, le « backup » ne permet qu'une autonomie très limitée dans le temps.

Dans le cas d'un four hybride, la consommation d'oxygène est considérablement plus faible, la capacité du « backup » peut donc être plus faible et il est souvent possible, en cas de rupture de fourniture d'oxygène, d'utiliser l'aérocombustion au moins pour maintenir le four à température. Toutefois, le four hybride nécessite pour son fonctionnement à la fois l'équipement associé avec la partie aérocombustion et l'équipement nécessaire pour la partie oxycombustion du four, ce qui rend l'équipement d'un four hybride particulièrement complexe et coûteux.

La présente invention a pour but d'améliorer et de remédier au moins partiellement aux problèmes décrits ci-dessus.

La présente invention propose d'atteindre ce but au moyen du procédé hybride et de l'installation hybride suivant l'invention tels que décrits ci-après en partant du four et du procédé du type tel que décrit dans US-A-6071116.

L'invention concerne notamment un procédé de fusion de verre dans un four de fusion comportant une chambre de fusion équipée de n brûleurs, avec n ≥ 1 et une installation de préchauffage. Dans le procédé suivant l'invention, on introduit de la matière première à fondre dans la chambre de fusion, on brûle du combustible au moyen des n brûleurs de manière à générer de l'énergique thermique pour la fusion de la matière première et d'obtenir du verre fondu. La combustion du combustible génère également un flux chaud de fumées qui présente une température à la sortie de la chambre entre 1000°C et 1600°C.

Afin de récupérer de l'énergie thermique desdites fumées chaudes, on introduit le flux chaud de fumées issu de la chambre dans l'installation de préchauffage.

Dans un premier échangeur thermique de l'installation de préchauffage, on chauffe un flux d'un premier oxydant, dit oxydant intermédiaire, par échange thermique avec le flux chaud de fumées de manière à générer un flux refroidi des fumées et un flux chauffé de l'oxydant intermédiaire ayant une température entre 600°C et 900°C. Ce flux d'oxydant intermédiaire contient de l'air et ayant une teneur en oxygène de 21%vol ou plus.

Dans un deuxième échangeur thermique de l'installation de préchauffage, on chauffe un flux d'un deuxième oxydant, dit oxydant riche par échange thermique avec le flux chauffé de l'oxydant intermédiaire de manière à générer un flux préchauffé de l'oxydant riche ayant une température entre 400°C et 650°C et un flux tempéré de l'oxydant intermédiaire ayant une température entre 350°C et 650°C. La teneur en oxygène de l'oxydant riche est supérieure à la teneur en oxygène de l'oxydant intermédiaire et se situe entre 80%vol et 100%vol. De préférence, la teneur en oxygène de l'oxydant riche est de 90%vol à 100%vol.

Le flux ainsi préchauffé de l'oxydant riche est fourni comme comburant à n1 des n brûleurs, dits premiers brûleurs, avec 1 ≤ n1 ≤ n. Au moins une partie du flux tempéré de l'oxydant intermédiaire est fourni comme comburant à n2 des n brûleurs, dits seconds brûleurs, avec 1 ≤ n2 ≤ n.

De cette manière, le procédé suivant l'invention bénéficie non seulement de l'efficacité de l'oxydant riche préchauffé utilisé comme comburant, mais également de l'énergie thermique résiduelle présente dans le flux tempéré d'oxydant intermédiaire. Ce qui plus est, ce procédé de fusion gagne en autonomie vis-à-vis de la fourniture d'oxydant riche en oxygène par rapport au procédé entièrement en oxycombustion.

Dans le contexte de la présente invention, on utilise le terme « échangeur thermique » au sens technique habituel du terme, c'est-à-dire pour désigner un appareil dans lequel au moins deux fluides de températures différentes circulent dans des enceintes distinctes et transmettent de la chaleur de l'une à l'autre.

Bien que le procédé suivant l'invention soit avantageux quand l'oxydant intermédiaire est de l'air non-enrichi (ayant une teneur en oxygène de 21%vol), les avantages du procédé sont plus manifestes quand l'oxydant intermédiaire présente une teneur en oxygène supérieure à 21%vol, mais inférieure à la teneur en oxygène de l'oxydant riche à l'entrée de n2 seconds brûleurs.

Si les matériaux et la construction du premier échangeur thermique le permettent, l'oxydant intermédiaire peut être enrichi en oxygène en amont du premier échangeur thermique. Dans ce cas, la teneur en oxygène du flux d'oxydant intermédiaire est supérieure à 21%vol à l'entrée du premier échangeur thermique.

On peut également enrichir le flux chauffé de l'oxydant intermédiaire en oxygène entre le premier et le deuxième échangeur thermique et/ou enrichir le flux tempéré de l'oxydant intermédiaire en oxygène entre le deuxième échangeur thermique et les n2 seconds brûleurs.

Quand la teneur en oxygène du flux tempéré de l'oxydant intermédiaire à l'entrée des n2 second brûleurs est entre 21%vol et 25%vol, il est possible d'utiliser des brûleurs/injecteurs conçus pour l'aérocombustion.

Pour des teneurs en oxygène du flux tempéré de l'oxydant intermédiaire à l'entrée des n2 second brûleurs entre 21%vol et 40%vol, et en particulier supérieures à 25%vol, il convient d'utiliser des brûleurs/injecteurs conçus pour la combustion avec de l'air enrichi.

Pour des teneurs en oxygène du flux tempéré de l'oxydant intermédiaire à l'entrée des n2 second brûleurs entre 40%vol et 90%vol, il convient de choisir des brûleurs/injecteurs adaptés à la plage de teneur en oxygène effectivement utilisée.

Le procédé suivant l'invention permet un grand nombre de variantes pour l'utilisation de l'oxydant riche et de l'oxydant intermédiaire comme comburants dans la chambre de fusion.

Il est ainsi préférable, mais pas indispensable, que chacun des n brûleurs soit un des n1 premiers brûleurs (utilisant de l'oxydant riche préchauffé comme comburant) et/ou un des n2 seconds brûleurs (utilisant de l'oxydant intermédiaire tempéré comme comburant).

Il est possible de combiner des premiers brûleurs et des seconds brûleurs dans une même zone de la chambre de fusion ou d'installer les premiers brûleurs et les seconds brûleurs dans des zones distinctes de la chambre.

Ainsi, quand la chambre de fusion comporte une zone amont dans laquelle on introduit la matière première à fondre et une zone aval comportant une sortie de verre fondu, il peut être avantageux d'installer les ou certains des n1 premiers brûleurs (qui utilisent de l'oxydant riche préchauffé comme comburant) dans la zone amont de la chambre. Quand la chambre de fusion comporte une zone aval d'affinage, il peut être utile d'équiper la zone d'affinage des ou de certains des n2 seconds brûleurs (qui utilisent de l'oxydant intermédiaire tempéré comme comburant).

Dans certains cas, l'installation de premiers et de seconds brûleurs dans des zones distinctes de la chambre peut être utile pour réduire la formation de NOx et pour l'affinage du verre fondu.

Suivant une forme de réalisation, aucun des n brûleurs appartient simultanément aux n1 premiers brûleurs et aux n2 seconds brûleurs, c'est-à-dire, aucun des n brûleurs n'utilise à la fois de l'oxydant riche et de l'oxydant intermédiaire comme comburants. Quand, dans ce cas de figure, n1 + n2 = n, chacun des n brûleurs est soit un premier brûleur alimenté en oxydant riche préchauffé comme comburant, soit un second brûleur alimenté en oxydant intermédiaire tempéré comme comburant.

Par contre, quand n1 = n, tous les n brûleurs sont des premiers brûleurs et donc alimentés en oxydant riche préchauffé comme comburant, au moins un desdits brûleurs est également alimenté en oxydant intermédiaire tempéré comme comburant, car n2 ≥ 1. De manière analogue, quand n2 = n, tous les n brûleurs sont des seconds brûleurs et sont donc alimentés en oxydant intermédiaire tempéré comme comburant, mais au moins un desdits brûleurs est également alimenté en oxydant riche préchauffé comme comburant car n1 ≥ 1.

Quand un des n brûleurs reçoit simultanément de l'oxydant riche préchauffé et de l'oxydant intermédiaire tempéré comme comburants, ce brûleur est à la fois un des n1 premiers brûleurs et un des n2 seconds brûleurs.

Suivant une forme de réalisation préférée, au moins un des n brûleurs est un brûleur à injection étagée de comburant. Ainsi, au moins un des n1 premiers brûleurs peut avantageusement être un brûleur à injection étagée de comburant, voire l'ensemble des n1 premiers brûleurs. De manière analogue, au moins un des n2 seconds brûleurs peut être un brûleur à injection étagée de comburant, voire l'ensemble des n2 second brûleurs. Quand la chambre comporte un ou plusieurs brûleurs qui appartiennent simultanément aux premiers et aux seconds brûleurs, et qui utilisent donc simultanément de l'oxydant riche et de l'oxydant intermédiaire comme comburants, au moins un desdits brûleurs est de manière utile un brûleur à injection étagée de comburant, avec injections séparées l'une de l'autre de l'oxydant riche et de l'oxydant intermédiaire dans la chambre de fusion. Ceci est de préférence le cas pour tous les brûleurs qui utilisent donc simultanément de l'oxydant riche et de l'oxydant intermédiaire comme comburants. Le ou les injecteurs d'oxydant riche et le ou les injecteurs d'oxydant intermédiaire desdits brûleurs peuvent être montés dans un même bloc dudit brûleur ou dans des blocs distincts pour l'oxydant riche et pour l'oxydant intermédiaire. De préférence, un tel brûleur injecte dans la chambre de fusion
- au moins un jet de combustible,
- au moins un jet d'oxydant riche préchauffé en contact avec ou à proximité du au moins jet de combustible, et
- au moins un jet d'oxydant intermédiaire tempéré à une plus grande distance du au moins un jet de combustible que le au moins un jet d'oxydant riche préchauffé.

Comme indiqué ci-dessus, il est possible, dans le procédé suivant l'invention, de régler la teneur en oxygène de l'oxydant intermédiaire en vue d'obtenir le profil thermique recherché dans le four. Il est également possible de régler la teneur en oxygène de l'oxydant intermédiaire et le débit d'oxydant riche vers les brûleurs en vue d'obtenir le profil thermique recherché. Ce double réglage peut notamment être utile pour les brûleurs qui utilisent simultanément de l'oxydant riche et de l'oxydant intermédiaire comme comburants.

L'installation de préchauffage peut avantageusement également être utilisée pour le préchauffage du combustible en amont de la chambre de fusion, c'est-à-dire en amont des brûleurs.

Le procédé suivant l'invention peut être utilisé dans tout type de four de fusion, tels que les fours de fusion à brûleurs latéraux et les fours de fusion à brûleurs transversaux, l'invention étant particulièrement utile pour les fours à brûleurs transversaux de type four float pour la production de verre plat.

La présente invention concerne également une installation de fusion particulièrement adaptée pour la mise en œuvre dudit procédé.

L'installation suivant l'invention comporte (i) une source d'air, (ii) une source d'un oxydant riche, (iii) une chambre de fusion et (iv) une installation de préchauffage.

La source d'un oxydant riche fournit un oxydant ayant une teneur en oxygène de 80%vol à 100%vol, de préférence de 90%vol à 100%vol.

La chambre de fusion est équipée de n ≥ 1 brûleur pour la combustion d'un combustible en vue de générer de l'énergie thermique à l'intérieur de la chambre. Cette combustion génère également un flux chaud de fumées dans la chambre qui comporte une sortie de fumées pour l'évacuation de la chambre du flux chaud de fumées.

L'installation de préchauffage comporte un premier échangeur thermique et un deuxième échangeur thermique.

Le premier échangeur thermique permet le chauffage d'un flux d'un oxydant intermédiaire par échange thermique avec le flux chaud de fumées. Ce premier échangeur thermique comporte une entrée de flux chaud de fumées en connexion fluidique avec la sortie de fumées de la chambre de fusion. Il comporte aussi une entrée d'un flux de l'oxydant intermédiaire en connexion fluidique avec la source d'air, l'oxydant intermédiaire comportant de l'air fourni par cette source. Le premier échangeur thermique présente également une sortie d'un flux chauffé de l'oxydant intermédiaire.

Le deuxième échangeur thermique permet le préchauffage d'un flux de l'oxydant riche par échange thermique avec le flux chauffé de l'oxydant intermédiaire. Ce deuxième échangeur thermique comporte une entrée du flux chauffé de l'oxydant intermédiaire en connexion fluidique avec la sortie du flux chauffé de l'oxydant intermédiaire du premier échangeur thermique. Il comporte aussi une entrée du flux de l'oxydant riche à préchauffer en connexion fluidique avec la source d'oxydant riche. Il comporte également une sortie d'un flux tempéré de l'oxydant intermédiaire et une sortie d'un flux préchauffé de l'oxydant riche.

La sortie du flux préchauffé de l'oxydant riche du deuxième échangeur thermique est en connexion fluidique avec une entrée de comburant des n1 premiers brûleurs, avec 1 ≤ n1 ≤ n, et la sortie du flux tempéré de l'oxydant intermédiaire est en connexion fluidique avec une entrée de comburant des n2 seconds brûleurs, avec 1 ≤ n2 ≤ n.

La source d'air comporte typiquement une soufflante d'air ou un compresseur d'air. La source d'oxydant riche comporte généralement un pipeline d'oxydant riche, une unité de séparation des gaz de l'air ou un réservoir d'oxydant riche, et de préférence une combinaison d'un pipeline d'oxydant riche ou d'une unité de séparation des gaz de l'air avec un réservoir d'oxydant riche, ce dernier pouvant être utilisé comme « backup » d'oxydant riche si besoin en est.

Afin de permettre l'enrichissement en oxygène de l'oxydant intermédiaire en amont du premier échangeur thermique, l'entrée du flux de l'oxydant intermédiaire du premier échangeur thermique est avantageusement connecté à la source d'air par une canalisation d'oxydant intermédiaire à chauffer, cette canalisation étant également en connexion fluidique avec une source d'oxygène, de préférence avec la source d'oxydant riche de l'installation.

Afin de permettre l'enrichissement en oxygène de l'oxydant intermédiaire entre le premier et le deuxième échangeur thermique, la sortie du flux chauffé de l'oxydant intermédiaire du premier échangeur thermique est connecté à l'entrée du flux chauffé de l'oxydant intermédiaire du deuxième échangeur thermique par une canalisation d'oxydant intermédiaire chauffé, ladite canalisation d'oxydant intermédiaire chauffé étant également en connexion fluidique avec une source d'oxygène, de préférence avec la source d'oxydant riche de l'installation.

Afin de permettre l'enrichissement en oxygène de l'oxydant intermédiaire en aval du deuxième échangeur thermique et avant l'entrée de comburant des seconds brûleurs, la sortie du flux tempéré de l'oxydant intermédiaire du deuxième échangeur thermique est avantageusement connectée à une entrée de comburant des n2 seconds brûleurs par une canalisation d'oxydant intermédiaire tempéré, ladite canalisation d'oxydant intermédiaire tempéré étant également en connexion fluidique avec une source d'oxygène, de préférence avec la source d'oxydant riche de l'installation.

Comme mentionné ci-dessus à propos du procédé suivant l'invention, chacun des n brûleurs peut être un des n1 premiers brûleurs et/ou un des n2 seconds brûleurs.

Une même zone de la chambre de fusion peut comporter des premiers brûleurs et des seconds brûleurs. Les ou les premiers et seconds brûleurs peuvent également être positionnés dans des zones distinctes de la chambre.

Ainsi, quand la chambre de fusion comporte une zone amont comportant une entrée pour la matière première à fondre et une zone aval comportant une sortie de verre fondu, il peut être avantageux d'avoir les ou certains des n1 premiers brûleurs dans cette zone amont de la chambre. Quand la chambre de fusion comporte une zone aval d'affinage, il peut être utile que la zone d'affinage comporte les ou certains des n2 seconds brûleurs. Un tel positionnement des premiers et des seconds brûleurs dans des zones distinctes de la chambre peut permettre de limiter la formation de NOx et de faciliter l'affinage du verre.

Suivant une forme de réalisation, aucun des n brûleurs appartient simultanément aux n1 premiers brûleurs et aux n2 seconds brûleurs, c'est-à-dire, aucun des n brûleurs n'est à la fois en connexion fluidique avec la sortie du flux préchauffé d'oxydant riche et avec la sortie du flux tempéré de l'oxydant intermédiaire. Quand, dans ce cas de figure, n1 + n2 = n, chacun des n brûleurs est soit un premier brûleur comportant une entrée de comburant en connexion fluidique avec la sortie du flux préchauffé d'oxydant riche, soit un second brûleur comportant une entrée de comburant en connexion fluidique avec la sortie du flux tempéré de l'oxydant intermédiaire.

Par contre, quand n1 = n, tous les n brûleurs sont des premiers brûleurs et donc en connexion fluidique avec la sortie du flux préchauffé d'oxydant riche, au moins un desdits brûleurs est également en connexion fluidique avec la sortie du flux tempéré d'oxydant intermédiaire, car n2 ≥ 1. De manière analogue, quand n2 = n, tous les n brûleurs sont des seconds brûleurs et sont donc en connexion fluidique avec la sortie du flux tempéré d'oxydant intermédiaire, au moins un desdits brûleurs étant également en connexion fluidique avec la sortie du flux préchauffé d'oxydant riche, car n1 ≥ 1.

Quand un des n brûleurs comporte simultanément une entrée de comburant en connexion fluidique avec la sortie du flux préchauffé d'oxydant riche et une entrée de comburant en connexion fluidique avec la sortie du flux tempéré de l'oxydant intermédiaire, ce brûleur est à la fois un des n1 premiers brûleurs et un des n2 seconds brûleurs.

Suivant une forme de réalisation préférée, au moins un des n brûleurs est un brûleur à injection étagée de comburant.

Ainsi, au moins un des n1 premiers brûleurs peut avantageusement être un brûleur à injection étagée de comburant, voire l'ensemble des n1 premiers brûleurs. De manière analogue, au moins un des n2 seconds brûleurs peut être un brûleur à injection étagée de comburant, voire l'ensemble des n2 second brûleurs.

Quand la chambre comporte un ou plusieurs brûleurs qui appartiennent simultanément aux premiers et aux seconds brûleurs, au moins un desdits brûleurs est de manière utile un brûleur à injection étagée de comburant. Ce au moins un brûleur comporte une entrée d'oxydant riche en connexion fluidique avec la sortie du flux préchauffé d'oxydant riche et une entrée d'oxydant intermédiaire en connexion fluidique avec la sortie du flux tempéré d'oxydant intermédiaire. Ce au moins un brûleur comporte également au moins un injecteur de combustible pour l'injection de combustible dans la chambre de fusion, au moins un injecteur d'oxydant riche en connexion fluidique avec l'entrée d'oxydant riche et positionnée pour l'injection d'oxydant riche dans la chambre de fusion et au moins un injecteur d'oxydant intermédiaire en connexion fluidique avec l'entrée d'oxydant intermédiaire pour l'injection d'oxydant intermédiaire dans la chambre séparément, c'est-à-dire à une distance de l'oxydant riche. De préférence, le au moins un injecteur d'oxydant riche permet d'injecter l'oxydant riche en contact avec ou à proximité du combustible et le au moins un injecteur d'oxydant intermédiaire permet d'injecter l'oxydant intermédiaire dans la chambre à une distance plus grande du combustible que l'oxydant riche. Le ou les injecteurs d'oxydant riche et le ou les injecteurs d'oxydant intermédiaire desdits brûleurs peuvent être montés dans un même bloc dudit brûleur ou dans des blocs distincts pour l'oxydant riche et pour l'oxydant intermédiaire.

L'installation de préchauffage peut également comporter une entrée de combustible à préchauffer et une sortie de combustible préchauffé, l'entrée de combustible à préchauffer étant en connexion fluidique avec une source de combustible, la sortie de combustible préchauffé étant en connexion fluidique avec une entrée de combustible des n brûleurs.

L'installation suivant l'invention peut comporter différents types de chambres de fusion. La chambre peut ainsi être une chambre de fusion à brûleurs transversaux ou à brûleurs latéraux. L'invention est particulièrement avantageuse pour des installations comportant une chambre de fusion à brûleurs transversaux de type four float.

Le premier échangeur thermique et/ou le deuxième échangeur thermique peuvent être des échangeurs thermiques tubulaires.

Le premier échangeur thermique peut être entouré d'une première virole et le deuxième échangeur thermique peut être entouré d'une deuxième virole séparée de la première virole. Il est également possible qu'une même virole entoure le premier et le deuxième échangeur thermique.

L'installation suivant l'invention peut également comporter une unité de contrôle pour le réglage de la teneur en oxygène de l'oxydant intermédiaire à l'entrée des seconds brûleurs. Dans ce cas, l'unité de contrôle règle l'enrichissement en oxygène de l'oxydant intermédiaire. L'unité de contrôle peut également régler la teneur en oxygène de l'oxydant intermédiaire et le débit d'oxydant riche vers les brûleurs.

La présente invention concerne également l'utilisation de l'une quelconque des forme de réalisation de l'installation suivant l'invention pour la mise en œuvre du procédé suivant l'invention dans l'une quelconque de ses formes de mise en œuvre.

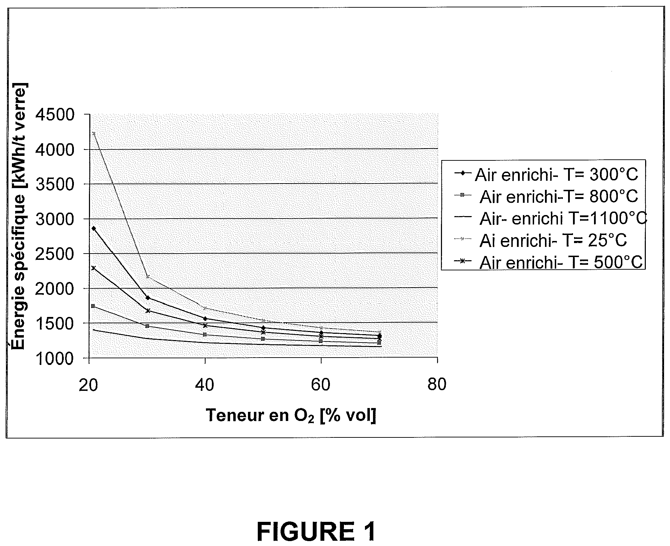

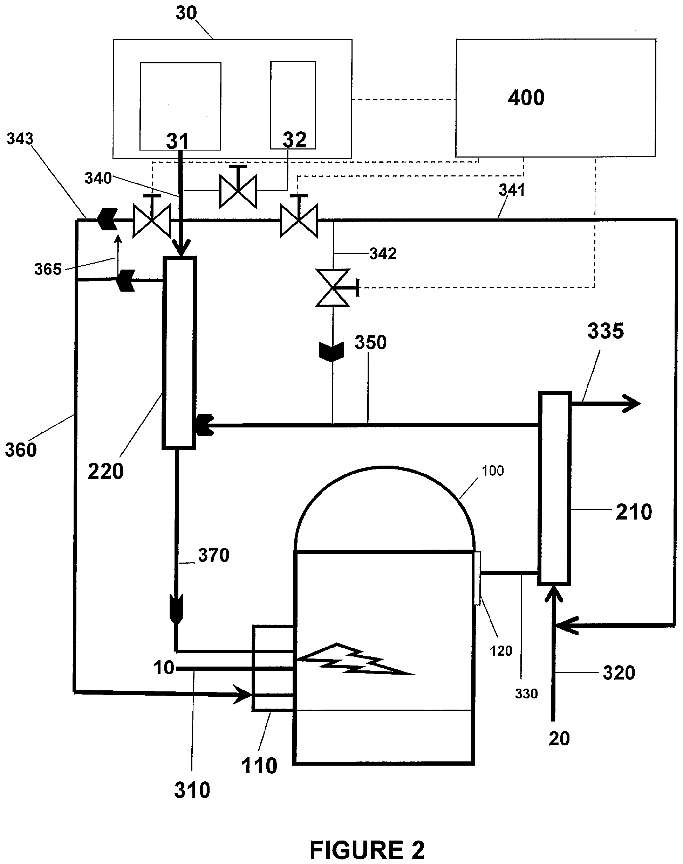

L'invention et ses avantages sont décrits plus en détail ci-après, référence étant faite aux figures 1 et 2, la figure 1 montrant l'efficacité énergétique nécessaire pour la fusion d'une tonne de verre sur un même four de fusion de 150 tonnes de verre par jour, et la figure 2 est une représentation schématique d'une forme de réalisation particulière de l'installation de fusion suivant l'invention et son fonctionnement.

Suivant l'invention, l'oxydant riche est préchauffé par échange thermique indirect avec les fumées chaudes évacuées de la chambre de combustion de la façon déjà décrite dans US-A-6071116, c'est-à-dire par le chauffage de l'oxydant intermédiaire dans le premier échangeur thermique, l'oxydant intermédiaire chauffé étant ensuite utilisé pour le préchauffage de l'oxydant riche dans le deuxième échangeur thermique. Cette technique connue permet en tant que telle par rapport à l'utilisation d'un oxydant riche non-préchauffé, un gain de l'10% sur les consommations d'oxygène et de combustible du four de fusion, pour une température de préchauffage de l'oxydant riche (et le cas échéant du combustible) et réactifs de 400°C à 650°C. Le gain exact est essentiellement fonction du niveau de température atteint par le ou les réactifs préchauffés, mais aussi du design du four, et du type de brûleur utilisé.

Le volume de l'oxydant intermédiaire nécessaire pour le préchauffage de l'oxydant riche (et le cas échéant du combustible) dépend notamment de la nature de l'oxydant intermédiaire et de sa capacité thermique massique. Ainsi, si dans le cas mentionné ci-dessus l'oxydant riche est de l'oxygène pur et que l'on l'utilise comme fluide caloporteur (oxydant intermédiaire) dans le premier et deuxième échangeur de l'air non-enrichi, le volume/débit de fluide caloporteur est environ égal à 1.8 - 2.2 fois le volume/débit de l'oxygène préchauffé.

Quand, dans le procédé décrit dans US-A-6071116, après le deuxième échangeur thermique le fluide caloporteur est rejeté dans les fumées de combustion et évacué par la cheminée, l'énergie thermique résiduelle contenue dans le fluide caloporteur tempéré après le préchauffage des réactifs (oxydant riche et éventuellement le combustible) n'est pas valorisée.

Suivant la présente invention, il est proposé d'utiliser comme fluide caloporteur un oxydant, tel que de l'air ou de l'air enrichi et de valoriser le flux tempéré du fluide caloporteur en aval de l'installation de préchauffage en utilisant ce flux tempéré en totalité ou pour partie comme comburant dans la chambre de fusion en complément du flux préchauffé de l'oxydant riche.

Pour une efficacité énergétique encore plus optimisée du procédé suivant l'invention, il est proposé d'enrichir l'air utilisé comme fluide caloporteur ou fluide intermédiaire en oxygène en amont de la chambre de fusion. Toutefois, suivant l'invention, la teneur en oxygène de l'air ainsi enrichi reste inférieure à la teneur en oxygène de l'oxydant riche à préchauffer.

Cet enrichissement se réalise de préférence partiellement ou totalement en amont du premier échangeur thermique. Un enrichissement partiel ou total en aval du premier échangeur thermique, c'est-à-dire entre le premier et le deuxième échangeur thermique ou encore en aval du deuxième échangeur thermique, peut également être envisagé, notamment si les matériaux et/ou la construction du premier échangeur thermique interdisent le chauffage de l'air enrichi en oxygène aux températures réalisées dans le premier échangeur thermique.

La teneur en oxygène ψ d'un comburant gazeux est définie comme ψ = VO₂/ (VO₂+ VR), avec VO₂ = volume d'oxygène et VR = volume des composants du comburant autres que l'oxygène.

Dans le cas d'air ou d'air enrichi en oxygène, on utilisera la formule approximative suivante : ψ = VO₂/ (VO₂ + VN₂), avec VN₂ = volume d'azote, la teneur en oxygène ψ de l'air étant ainsi 21%vol.

En augmentant la teneur en oxygène ψ de l'oxydant intermédiaire en amont de la chambre de fusion, on réalise une augmentation de la température adiabatique de flamme avec l'oxydant intermédiaire et on augmente ainsi l'efficacité dudit oxydant intermédiaire lors de son utilisation en tant que comburant dans la chambre de fusion de verre. On note, par exemple, que l'air non-enrichi préchauffé à 1200°C (ce qui est généralement le cas d'un four de fusion à régénérateur) donne la même température adiabatique de flamme avec de l'air enrichi en oxygène à 25°C avec ψ = 0,34.

Quand, suivant l'invention, on utilise comme comburant, en complément de l'oxydant riche préchauffé, de l'air enrichi en oxygène tempéré avec 21% < ψ < 40%, on veillera de préférence à limiter la formation de NOx. Ceci est notamment possible en utilisant les deux comburants dans des zones distinctes de la chambre de fusion. Il est plus particulièrement indiqué d'utiliser l'oxydant riche préchauffé comme comburant dans la zone de la chambre dans laquelle les puissances sont les plus élevées (incluant typiquement la zone de la chambre dans laquelle se trouve la matière première à l'état solide) et d'utiliser l'oxydant intermédiaire tempéré dans la zone de la chambre dans laquelle les puissances sont plus faibles (par exemple la zone d'affinage dans une chambre de fusion/affinage).

Il est également possible de combiner l'oxydant riche préchauffé avec l'oxydant intermédiaire tempéré dans une même zone de la chambre de fusion, voire dans un seul brûleur tout en conservant les caractéristiques et une forme de flamme adaptée et en limitant la formation de NOx, notamment en utilisant un brûleur à injection étagée de comburant et en injectant, par exemple, l'oxydant riche préchauffé dans la chambre de fusion en contact avec le combustible et/ou à proximité du combustible et en injectant l'oxydant intermédiaire tempéré dans la chambre de fusion à une plus grande distance du combustible. Des brûleurs appropriés sont notamment commercialisés par la demanderesse dans la gamme de brûleurs ALGLASS SUN™ et sont décrits dans WO-A-2005059438.

Quand ψ = 21%vol jusqu'à 24 à 25%vol, il est possible d'utiliser du matériel et notamment des brûleurs et/ou injecteurs conçus pour l'aérocombustion.

Quand ψ = 25 à 40%vol, on utilisera des brûleurs/injecteurs adaptés pour l'utilisation de l'air enrichi en oxygène comme comburant. Quand 40%vol ≤ ψ ≤ 90%vol, il est indiqué d'utiliser du matériel, et notamment des brûleurs et/ou injecteurs spécifiquement conçus pour l'utilisation d'un tel comburant fortement enrichi en oxygène.

Pour ce qui est de "l'efficacité thermique", en termes de transfert de chaleur vers la charge, les courbes de la figure 1 montrent l'efficacité énergétique exprimée en kWh nécessaires pour la fusion d'une tonne de verre sur un même four de fusion de 150 tonnes de verre par jour.

On note que l'efficacité thermique dépend de la température du comburant et de sa teneur en oxygène ψ. Quand le comburant est de l'air enrichi en oxygène à 500°C avec un ψ d'environ 28%vol, l'efficacité énergétique est du même ordre que pour l'air non-enrichi à 800°C.

Pour de l'air enrichi en oxygène à 500°C avec un ψ d'environ 35%vol, l'efficacité énergétique est du même ordre que pour l'air non-enrichi à 1100°C.

L'utilisation comme oxydant intermédiaire d'air enrichi en oxygène dans le procédé suivant l'invention suivie de l'utilisation dudit oxydant intermédiaire tempéré comme comburant dans la chambre de fusion permet ainsi de valoriser l'énergie thermique encore contenue dans le fluide intermédiaire après préchauffage de l'oxydant riche.

Cette utilisation permet aussi de dimensionner l'échangeur primaire de manière à optimiser l'efficacité énergétique et économique globale de l'installation.

Étant ainsi donné que l'énergie thermique contenue dans le fluide/oxydant intermédiaire après le préchauffage de l'oxydant riche n'est pas perdue mais effectivement valorisée dans la chambre de fusion, il n'est plus nécessaire de limiter cette énergie thermique à un minimum comme cela était le cas dans le procédé antérieur. Suivant l'invention, on vise au contraire à optimiser l'efficacité énergétique globale du procédé en choisissant les températures de l'oxydant riche préchauffé et de l'oxydant intermédiaire tempéré en aval du deuxième échangeur thermique de manière appropriée.

En effet, le débit d'oxydant intermédiaire peut être dimensionné pour récupérer un maximum de l'énergie thermique contenue dans les fumées à la sortie de la chambre de fusion, sans être limité par les débits/températures maximaux fixés et définis pour le préchauffage de l'oxydant riche et le cas échéant également le combustible. Avec les matériaux actuellement disponibles sur le marché à un prix commercialement rentable, la température maximale de l'oxydant riche préchauffé est typiquement limitée à 550°C et celle pour le gaz naturel à 450°C.

Pour un même débit et une même température d'oxydant riche préchauffé, il est possible, en augmentant la température de l'oxydant intermédiaire chauffé (c'est-à-dire à la température de l'oxydant intermédiaire à la sortie du premier échangeur thermique et à l'entrée du deuxième échangeur thermique), d'augmenter la température de l'oxydant intermédiaire tempéré (c'est-à-dire à la sortie du deuxième échangeur thermique, voire à l'entrée de comburant des n2 seconds brûleurs) tout en diminuant la surface d'échange nécessaire pour le deuxième échangeur thermique. On peut, par exemple, ainsi utiliser de l'oxydant intermédiaire tempéré à 600°C comme comburant pour les n2 seconds brûleurs de l'installation. Quand ledit oxydant intermédiaire présente une teneur en oxygène ψ d'environ 0.25 à l'entrée de comburant des n2 seconds brûleurs, ledit comburant aura les mêmes performances énergétiques que l'air non-enrichi préchauffé à 1100°C.

Grâce à la consommation réduite d'oxygène par rapport à un four utilisant uniquement un oxydant riche préchauffé comme comburant, l'installation présente une plus grande autonomie en cas de défaillance de la fourniture continue d'oxygène et la capacité du « backup » peut être réduite en conséquence.

L'installation illustrée dans la figure 2 comporte une chambre de fusion 100 équipée d'un nombre n de brûleurs 110 qui sont tous à la fois des premiers brûleurs et des seconds brûleurs (un seul brûleur est représenté). La chambre de fusion comporte également une sortie de fumées 120. Le four comporte également une installation de préchauffage comportant un premier échangeur thermique 210 et un deuxième échangeur thermique 220. Un réseau de canalisations relie le premier échangeur thermique 210, le deuxième échangeur thermique 220, les brûleurs 110 et la sortie de fumées 120 de la chambre de fusion 100.

Une source 10 de combustible, tel qu'un combustible gazeux, est reliée par une canalisation 310 à une entrée de combustible des brûleurs 110. Cette source 10 fournit ainsi du combustible aux brûleurs 110.

Une source d'air 20, typiquement un compresseur d'air ou une soufflante d'air, est reliée par une canalisation 320 à une entrée d'oxydant intermédiaire du premier échangeur thermique 210. La sortie de fumées 120 de la chambre de fusion 100 est reliée par la canalisation 330 par une entrée de fumées du premier échangeur thermique 210. A l'intérieur du premier échangeur thermique 210, les fumées dont la température varie entre 1000°C et 1600°C à la sortie de la chambre, chauffent l'oxydant intermédiaire (air) par échange thermique. On obtient ainsi un flux refroidi de fumées qui est évacué du premier échangeur thermique 210 par la canalisation 335 et un flux chaud de l'oxydant intermédiaire qui est évacué du premier échangeur thermique 210 par la canalisation 350.

L'installation comporte une source 30 qui fournit l'oxydant riche, typiquement un flux d'un gaz contenant 90%vol d'oxygène. La source 30 comporte une source principale 31 pour la fourniture en continu d'oxydant riche, typiquement un pipeline d'oxygène ou une unité de séparation des gaz de l'air, et un réservoir 32 d'oxydant riche qui est utilisé comme « backup » en cas d'insuffisance de fourniture d'oxydant riche par la source principale. Un flux de l'oxydant riche est amené vers une entrée d'oxydant riche du deuxième échangeur thermique 220 par la canalisation 340.

Le flux chaud de l'oxydant intermédiaire, ayant une température variant entre 600°C et 900°C à la sortie du premier échangeur thermique 210, est amené vers une entrée d'oxydant intermédiaire du deuxième échangeur thermique 220 par la canalisation 350.

A l'intérieur du deuxième échangeur thermique 220, l'oxydant riche fourni par la source 30 est préchauffé jusqu'à une température allant de 400°C à 650°C par échange thermique avec l'oxydant intermédiaire chaud. L'oxydant riche ainsi préchauffé est évacué du deuxième échangeur thermique 220 par la canalisation 370. Cette canalisation 370 amène le deuxième oxydant préchauffé comme comburant vers une entrée d'oxydant riche des brûleurs 110.

L'oxydant intermédiaire est évacué du deuxième échangeur thermique 220 par la canalisation 360 à une température tempérée de 350°C à 650°C. La canalisation 360 amène au moins une partie de l'oxydant intermédiaire préchauffé comme comburant vers une entrée d'oxydant intermédiaire des brûleurs 110. Quand le débit d'oxydant intermédiaire tempéré dépasse le besoin en oxydant intermédiaire des brûleurs 110 de la chambre de fusion 100, l'excès d'oxydant intermédiaire tempéré peut être évacué par la branche 356 de la canalisation 360 avant d'être utilisé ailleurs ou d'être évacué par la cheminée.

Pour une plus grande efficacité énergétique du procédé, il est possible d'enrichir l'air de l'oxydant intermédiaire en oxygène en amont des brûleurs. Ledit enrichissement peut avoir lieu en amont du premier échangeur thermique 210. Dans ce cas, la canalisation 341 amène un flux contrôlé d'oxydant riche vers la canalisation 320 par laquelle l'air fourni par la source 20 est amené ver le premier échangeur thermique 210. Ceci nécessite naturellement que les matériaux et la construction du premier échangeur thermique permettent le chauffage fiable de l'air ainsi enrichi en oxygène avec des fumées ayant une température variant entre 1000°C et 1600°C.

Il est également possible d'effectuer un enrichissement en oxygène du flux chaud de l'oxydant intermédiaire, le cas échéant en combinaison avec un premier enrichissement en amont du premier échangeur thermique. Dans ce cas, un flux contrôlé de l'oxydant riche est amené par la branche 342 de la canalisation 341 vers la canalisation 350 qui amène le flux chaud d'oxydant intermédiaire du premier échangeur thermique 210 vers le deuxième échangeur thermique 220.

Finalement, l'oxydant intermédiaire peut également être enrichi en oxygène en aval du deuxième échangeur thermique 220. Dans ce cas, la canalisation 343 amène un flux contrôlé d'oxydant riche vers la canalisation 360 qui amène le flux tempéré d'oxydant intermédiaire vers l'entrée d'oxydant intermédiaire des brûleurs 110.

Il est à noter que l'enrichissement en oxygène de l'oxydant intermédiaire peut être utilisé comme paramètre de contrôle ou d'optimisation du procédé de fusion. Il est, par exemple possible, d'ajuster l'enrichissement en oxygène de l'oxydant intermédiaire en fonction de la tirée du four. Quand l'oxydant riche et l'oxydant intermédiaire sont utilisés comme comburants dans différentes zone de la chambre de fusion, il est possible de réguler au moins partiellement la température dans la zone utilisant l'oxydant intermédiaire comme comburant en ajustant le degré d'enrichissement en oxygène de l'oxydant intermédiaire. Quand l'oxydant riche et l'oxydant intermédiaire sont fournis comme comburants à un même brûleur à injection étagée de comburants, il est par exemple possible d'ajuster les propriétés de la flamme en ajustant les débits d'oxydant riche et d'oxydant intermédiaire et en ajustant le degré d'enrichissement en oxygène de l'oxydant intermédiaire.

A cette fin, l'installation peut être munie d'une unité de réglage 400.

Une seule installation de préchauffage est représentée dans la figure 2. Toutefois, une installation de fusion peut comporter plusieurs installations de préchauffage, notamment :
- quand le nombre de brûleurs qui utilisent de l'oxydant riche préchauffé et/ou de l'oxydant intermédiaire tempéré est important, et/ou
- quand lesdits brûleurs sont positionnés à des endroits espacés.

Dans le cas illustré dans la figure 2, l'installation comporte un premier échangeur thermique 210 et un seul deuxième échangeur thermique 220. Toutefois, il est possible, notamment pour les raisons indiquées ci-dessus, de prévoir au moins deux deuxièmes échangeurs thermiques 220 pour un seul premier échangeur thermique 210. A ce propos, référence est faite à l'enseignement donné dans US-A-6071116.

## Revendications

1. Procédé de fusion de verre dans un four de fusion comportant une chambre de fusion (100) équipée de n brûleurs (110), avec n ≥ 1 et une installation de préchauffage,
procédé dans lequel :
• on introduit de la matière première à fondre dans la chambre de fusion (100),
• on brûle du combustible au moyen des n brûleurs (110) de manière à générer de l'énergique thermique pour la fusion de la matière première et d'obtenir du verre fondu et un flux chaud de fumées présentant une température à la sortie de la chambre de fusion (100) variant entre 1000°C et 1600°C,
• on introduit le flux chaud de fumées issu de la chambre (110) dans l'installation de préchauffage,
• on chauffe, dans un premier échangeur thermique (210) de l'installation de préchauffage, un flux d'un premier oxydant, dit oxydant intermédiaire, ayant une teneur en oxygène de 21%vol ou plus et contenant de l'air, par échange thermique avec le flux chaud de fumées de manière à générer un flux refroidi des fumées et un flux chauffé de l'oxydant intermédiaire ayant une température variant entre 600°C et 900°C,
• on chauffe, dans un deuxième échangeur thermique (220) de l'installation de préchauffage, un flux d'un deuxième oxydant, dit oxydant riche, ayant une teneur en oxygène entre 80%vol et 100%vol et supérieure à la teneur en oxygène de l'oxydant intermédiaire par échange thermique avec le flux chauffé de l'oxydant intermédiaire de manière à générer un flux préchauffé de l'oxydant riche ayant une température entre 400°C et 650°C et un flux tempéré de l'oxydant intermédiaire ayant une température entre 350°C et 650°C, et
• on fourni le flux préchauffé de l'oxydant riche comme comburant à n1 des n brûleurs (110), dits premiers brûleurs, avec 1 ≤ n1 ≤ n,
le procédé étant **caractérisé en ce que** :
• on fourni au moins une partie du flux tempéré de l'oxydant intermédiaire comme comburant à n2 des n brûleurs (110), dits seconds brûleurs, avec 1 ≤ n2 ≤ n.

2. Procédé suivant la revendication 1, dans lequel, l'oxydant intermédiaire a une teneur en oxygène supérieure à 21%vol..

3. Procédé suivant l'une quelconque des revendications précédentes, dans lequel la teneur en oxygène du flux tempéré d'oxydant intermédiaire à l'entrée des n2 second brûleurs est entre 21%vol et 40%vol, de préférence supérieure à 21%vol et inférieure ou égale à 40%vol.

4. Procédé suivant l'une des revendications 1 et 2, dans lequel, la teneur en oxygène du flux tempéré de l'oxydant intermédiaire à l'entrée des n2 second brûleurs est entre 40%vol et 90%vol.

5. Procédé suivant l'une des revendications précédentes, dans lequel n1 = n.

6. Procédé suivant l'une des revendications précédentes, dans lequel n2 = n.

7. Procédé suivant l'une quelconque des revendications précédentes, dans lequel au moins un des n brûleurs (110) est un brûleur à injection étagée de comburant.

8. Installation de fusion de verre comportant :
• une source d'air (20),
• une source d'un oxydant riche (30) ayant une teneur en oxygène de 80%vol à 100%vol, de préférence de 90%vol à 100%vol,
• une chambre de fusion (100) équipée de n brûleurs (110) pour la combustion d'un combustible avec génération d'énergie thermique et un flux chaud de fumées à l'intérieur de la chambre, avec n ≥ 1, la chambre de fusion comportant également une sortie de fumées (120) pour l'évacuation de la chambre du flux chaud de fumées,
• une installation de préchauffage comportant :
i. un premier échangeur thermique (210) pour le chauffage d'un flux d'un oxydant intermédiaire par échange thermique avec le flux chaud de fumées, ledit oxydant intermédiaire comportant de l'air fourni par la source d'air (20), ledit premier échangeur thermique (210) ayant une entrée de flux chaud de fumées en connexion fluidique avec la sortie de fumées (120) de la chambre de fusion (100), une entrée d'un flux de l'oxydant intermédiaire en connexion fluidique avec la source d'air et une sortie d'un flux chauffé de l'oxydant intermédiaire, et
ii un deuxième échangeur thermique (220) pour le préchauffage d'un flux de l'oxydant riche par échange thermique avec le flux chauffé de l'oxydant intermédiaire, le deuxième échangeur thermique ayant une entrée du flux chauffé de l'oxydant intermédiaire en connexion fluidique avec la sortie du flux chauffé de l'oxydant intermédiaire du premier échangeur thermique (210), une entrée du flux de l'oxydant riche à préchauffer en connexion fluidique avec la source d'oxydant riche (30), une sortie d'un flux tempéré de l'oxydant intermédiaire et une sortie d'un flux préchauffé de l'oxydant riche
la sortie du flux préchauffé de l'oxydant riche étant en connexion fluidique avec une entrée de comburant de n1 des n brûleurs (110), dits premiers brûleurs, avec 1 ≤ n1 ≤ n,
l'installation étant **caractérisée en ce que**:
la sortie du flux tempéré de l'oxydant intermédiaire est en connexion fluidique avec une entrée de comburant de n2 des n brûleurs (110), dits seconds brûleurs, avec 1 ≤ n2 ≤ n.

9. Installation suivant la revendication 8, dans laquelle la source d'oxydant riche comporte un pipeline d'oxydant riche, une unité de séparation des gaz de l'air ou un réservoir d'oxydant riche.

10. Installation suivant l'une des revendications 8 et 9 , dans laquelle l'entrée d'un flux de l'oxydant intermédiaire du premier échangeur thermique est connecté à la source d'air par une canalisation d'oxydant intermédiaire à chauffer, ladite canalisation d'oxydant intermédiaire à chauffer étant également en connexion fluidique avec une source d'oxygène pour l'enrichissement en oxygène de l'air fourni par la source d'air en amont de l'entrée d'un flux de l'oxydant intermédiaire du premier échangeur thermique, ladite source d'oxygène étant de préférence la source d'oxydant riche.

11. Installation suivant l'une quelconque des revendications 8 à 10, dans laquelle la sortie du flux chauffé de l'oxydant intermédiaire du premier échangeur thermique est connecté à l'entrée du flux chauffé de l'oxydant intermédiaire du deuxième échangeur thermique par une canalisation d'oxydant intermédiaire chauffé, ladite canalisation d'oxydant intermédiaire chauffé étant également en connexion fluidique avec une source d'oxygène pour l'enrichissement en oxygène du flux chauffé de l'oxydant intermédiaire entre le premier et le deuxième échangeur thermique, ladite source d'oxygène étant de préférence la source d'oxydant riche.

12. Installation suivant l'une quelconque des revendications 8 à 11, dans laquelle la sortie du flux tempéré de l'oxydant intermédiaire du deuxième échangeur thermique (220) est connectée à une entrée de comburant des n2 seconds brûleurs par une canalisation d'oxydant intermédiaire tempéré, ladite canalisation d'oxydant intermédiaire tempéré étant également en connexion fluidique avec une source d'oxygène pour l'enrichissement en oxygène du flux tempéré de l'oxydant intermédiaire en amont des n2 seconds brûleurs.

13. Installation suivant l'une quelconque des revendications 8 à 12, dans laquelle chaque brûleur(110) est un des n1 premiers brûleurs et/ou un des n2 seconds brûleurs.

14. Installation suivant l'une quelconque des revendications 8 à 13, dans laquelle au moins un des n brûleurs est un brûleur à injection étagée de comburant.

15. Utilisation d'une installation suivant l'une quelconque des revendications 8 à 14, pour la mise en œuvre d'un procédé de fusion suivant l'une quelconque des revendications 1 à 7.

## Patentansprüche

1. Verfahren zum Schmelzen von Glas in einem Schmelzofen, umfassend eine Schmelzkammer (100), die mit n Brennern (110) ausgestattet ist, mit n ≥ 1, und eine Vorwärmanlage,
wobei in dem Verfahren:
• zu schmelzender Rohstoff in die Schmelzkammer (100) eingeleitet wird,
• Brennstoff mittels der n Brenner (110) verbrannt wird, sodass Wärmeenergie für das Schmelzen von Rohstoff erzeugt wird und geschmolzenes Glas und eine warme Rauchströmung erhalten werden, die eine Temperatur am Ausgang der Schmelzkammer (100) aufweist, die zwischen 1000 °C und 1600 °C variiert,
• die warme Rauchströmung aus der Kammer (110) in die Vorwärmanlage eingeleitet wird,
• in einem ersten Wärmetauscher (210) der Vorwärmanlage eine Strömung eines ersten Oxidationsmittels, Zwischenoxidationsmittel genannt, das einen Sauerstoffgehalt von 21 Vol.-% oder mehr hat und Luft enthält, durch Wärmeaustausch mit der warmen Rauchströmung erwärmt wird, sodass eine abgekühlte Rauchströmung und eine erwärmte Strömung des Zwischenoxidationsmittels, die eine Temperatur hat, die zwischen 600 °C und 900 °C variiert, erzeugt werden,
• in einem zweiten Wärmetauscher (220) der Vorwärmanlage eine Strömung eines zweiten Oxidationsmittels, reiches Oxidationsmittel genannt, das einen Sauerstoffgehalt zwischen 80 Vol.-% und 100 Vol.-%, hat und der höher ist als der Sauerstoffgehalt des Zwischenoxidationsmittels, durch Wärmeaustausch mit der erwärmten Strömung des Zwischenoxidationsmittels erwärmt wird, sodass eine vorgewärmte Strömung des reichen Oxidationsmittels, die eine Temperatur zwischen 400 °C und 650 °C hat, und eine temperierte Strömung des Zwischenoxidationsmittels, die eine Temperatur zwischen 350 °C und 650 °C hat, erzeugt werden, und
• die vorgewärmte Strömung des reichen Oxidationsmittels als Sauerstoffträger n1 der n Brenner (110) zugeführt wird, erste Brenner genannt, mit 1 ≤ n1 ≤ n,
wobei das Verfahren **dadurch gekennzeichnet ist, dass**:
• mindestens ein Teil der temperierten Strömung des Zwischenoxidationsmittels als Sauerstoffträger n2 der n Brenner (110) zugeführt wird, zweite Brenner genannt, mit 1 ≤ n2 ≤ n.

2. Verfahren nach Anspruch 1, wobei das Zwischenoxidationsmittel einen Sauerstoffgehalt hat, der höher als 21 Vol.-% ist.

3. Verfahren nach einem der vorstehenden Ansprüche, wobei der Sauerstoffgehalt der temperierten Zwischenoxidationsmittelströmung am Einlass der n2 zweiten Brenner zwischen 21 Vol.-% und 40 Vol.-% ist, vorzugsweise höher als 21 Vol.-% und kleiner oder gleich 40 Vol.-%.

4. Verfahren nach einem der Ansprüche 1 und 2, wobei der Sauerstoffgehalt der temperierten Strömung des Zwischenoxidationsmittels am Einlass der n2 zweiten Brenner zwischen 40 Vol.-% und 90 Vol.-% ist.

5. Verfahren nach einem der vorstehenden Ansprüche, wobei n1 = n.

6. Verfahren nach einem der vorstehenden Ansprüche, wobei n2 = n.

7. Verfahren nach einem der vorstehenden Ansprüche, wobei mindestens einer der n Brenner (110) ein Brenner mit stufenweiser Sauerstoffträger-Einspritzung ist.

8. Anlage zum Glasschmelzen, umfassend:
• eine Luftquelle (20),
• eine Quelle eines reichen Oxidationsmittels (30), das einen Sauerstoffgehalt von 80 Vol.-% bis 100 Vol.-% hat, vorzugsweise von 90 Vol.-% bis 100 Vol.-%,
• eine Schmelzkammer (100), die mit n Brennern (110) ausgestattet ist, für die Verbrennung eines Brennstoffs mit Erzeugung von Wärmeenergie und einer warmen Rauchströmung im Inneren der Kammer, mit n ≥ 1, wobei die Schmelzkammer ebenfalls einen Rauchausgang (120) für den Ausgang der warmen Rauchströmung aus der Kammer umfasst,
• eine Vorwärmanlage, umfassend:
i. einen ersten Wärmetauscher (210) für das Erwärmen einer Strömung eines Zwischenoxidationsmittels durch Wärmeaustausch mit der warmen Rauchströmung, wobei das Zwischenoxidationsmittel Luft umfasst, die durch die Luftquelle (20) zugeführt wird, wobei der erste Wärmetauscher (210) einen Einlass einer warmen Rauchströmung in fluidischer Verbindung mit dem Rauchausgang (120) der Schmelzkammer (100), einen Einlass einer Strömung des Zwischenoxidationsmittels in fluidischer Verbindung mit der Luftquelle und einen Ausgang einer warmen Strömung des Zwischenoxidationsmittels hat, und
ii. einen zweiten Wärmetauscher (220) für das Vorwärmen einer Strömung des reichen Oxidationsmittels durch Wärmeaustausch mit der erwärmten Strömung des Zwischenoxidationsmittels, wobei der zweite Wärmetauscher einen Einlass der erwärmten Strömung des Zwischenoxidationsmittels in fluidischer Verbindung mit dem Ausgang der erwärmten Strömung des Zwischenoxidationsmittels des ersten Wärmetauschers (210), einen Einlass der vorzuwärmenden Strömung des reichen Oxidationsmittels in fluidischer Verbindung mit der Quelle eines reichen Oxidationsmittels (30), einen Ausgang einer temperierten Strömung des Zwischenoxidationsmittels und einen Ausgang einer vorgewärmten Strömung des reichen Oxidationsmittels hat
wobei der Ausgang der vorgewärmten Strömung des reichen Oxidationsmittels in fluidischer Verbindung mit einem Sauerstoffträgereinlass von n1 der n Brenner (110) steht, erste Brenner genannt, mit 1 ≤ n1 ≤ n,
wobei die Anlage **dadurch gekennzeichnet ist, dass**:
der Ausgang der temperierten Strömung des Zwischenoxidationsmittels in fluidischer Verbindung mit einem Sauerstoffträgereinlass von n2 der n Brenner (110) steht, zweite Brenner genannt, mit 1 ≤ n2 ≤ n.

9. Anlage nach Anspruch 8, wobei die Quelle eines reichen Oxidationsmittels eine Pipeline eines reichen Oxidationsmittels, eine Einheit zum Abscheiden der Gase von der Luft oder einen Behälter eines reichen Oxidationsmittels umfasst.

10. Anlage nach einem der Ansprüche 8 und 9, wobei der Einlass einer Strömung des Zwischenoxidationsmittels des ersten Wärmetauschers mit der Luftquelle durch eine Rohrleitung eines zu erwärmenden Zwischenoxidationsmittels verbunden ist, wobei die Rohrleitung eines zu erwärmenden Zwischenoxidationsmittels ebenfalls in fluidischer Verbindung mit einer Sauerstoffquelle für die Sauerstoffanreicherung der Luft steht, die durch die Luftquelle stromaufwärts des Einlasses einer Strömung des Zwischenoxidationsmittels des ersten Wärmetauschers zugeführt wird, wobei die Sauerstoffquelle vorzugsweise die Quelle eines reichen Oxidationsmittels ist.

11. Anlage nach einem der Ansprüche 8 bis 10, wobei der Ausgang der erwärmten Strömung des Zwischenoxidationsmittels des ersten Wärmetauschers mit dem Einlass der erwärmten Strömung des Zwischenoxidationsmittels des zweiten Wärmetauschers durch eine Rohrleitung eines erwärmten Zwischenoxidationsmittels verbunden ist, wobei die Rohrleitung eines erwärmten Zwischenoxidationsmittels ebenfalls in fluidischer Verbindung mit einer Sauerstoffquelle für die Sauerstoffanreicherung der erwärmten Strömung des Zwischenoxidationsmittels zwischen dem ersten und dem zweiten Wärmetauscher steht, wobei die Sauerstoffquelle vorzugsweise die Quelle eines reichen Oxidationsmittels ist.

12. Anlage nach einem der Ansprüche 8 bis 11, wobei der Ausgang der temperierten Strömung des Zwischenoxidationsmittels des zweiten Wärmetauschers (220) mit einem Sauerstoffträgereinlass der n2 zweiten Brenner durch eine Rohrleitung eines temperierten Zwischenoxidationsmittels verbunden ist, wobei die Rohrleitung eines temperierten Zwischenoxidationsmittels ebenfalls in fluidischer Verbindung mit einer Sauerstoffquelle für die Sauerstoffanreicherung der temperierten Strömung des Zwischenoxidationsmittels stromaufwärts der n2 zweiten Brenner steht.

13. Anlage nach einem der Ansprüche 8 bis 12, wobei jeder Brenner (110) einer der n1 ersten Brenner und/oder einer der n2 zweiten Brenner ist.

14. Anlage nach einem der Ansprüche 8 bis 13, wobei mindestens einer der n Brenner ein Brenner mit stufenweiser Sauerstoffträger-Einspritzung ist.

15. Verwendung einer Anlage nach einem der Ansprüche 8 bis 14 für die Umsetzung eines Schmelzverfahrens nach einem der Ansprüche 1 bis 7.

## Claims

1. Method for melting glass in a melting furnace comprising a melting chamber (100) equipped with n burners (110), with n ≥ 1 and a preheating installation, method wherein:
• raw material to be melted is introduced into the melting chamber (100),
• fuel is burned by means of n burners (110) so as to generate thermal energy for melting the raw material and to obtain the melted glass and a hot stream of smoke having a temperature at the outlet of the melting chamber (100) varying between 1000°C and 1600°C,
• the hot stream of smoke coming from the chamber (110) is introduced into the preheating installation,
• in a first heat exchanger (210) of the preheating installation, a stream of a first oxidant, called intermediate oxidant, having an oxygen content of 21% vol. or more and containing air, is heated by heat exchange with the hot stream of smoke so as to generate a cooled stream of smoke and a heated stream of intermediate oxidant having a temperature varying between 600°C and 900°C,
• in a second heat exchanger (220) of the preheating installation, a stream of a second oxidant, called rich oxidant, having an oxygen content of between 80% vol. and 100% vol. and greater than the oxygen content of the intermediate oxidant is heated by heat exchange with the heated stream of intermediate oxidant, so as to generate a preheated stream of rich oxidant having a temperature of between 400°C and 650°C and a temperate stream of intermediate oxidant having a temperature of between 350°C and 650°C, and
• the preheated stream of rich oxidant is provided as oxidizer at n1 of the n burners (110), called first burners, with 1 ≤ n1 ≤ n,
the method being **characterised in that**:
• at least some of the temperate stream of intermediate oxidant is provided as oxidizer at n2 of the n burners (110), called second burners, with 1 ≤ n2 ≤ n.

2. Method according to claim 1, wherein, the intermediate oxidant has an oxygen content greater than 21% vol..

3. Method according to any one of the preceding claims, wherein the oxygen content of the temperate stream of intermediate oxidant at the inlet of the n2 second burners is between 21% vol. and 40% vol., preferably greater than 21% vol. and less than or equal to 40% vol.

4. Method according to any one of claims 1 and 2, wherein, the oxygen content of the temperate stream of intermediate oxidant at the inlet of the n2 second burners is between 40% vol. and 90% vol.

5. Method according to any one of the preceding claims, wherein n1 = n.

6. Method according to any one of the preceding claims, wherein n2 = n.

7. Method according to any one of the preceding claims, wherein at least one of the n burners (110) is a staged combustion-oxidant injection burner.

8. Glass melting installation comprising:
• an air source (20),
• a source of a rich oxidant (30) having an oxygen content of 80% vol. to 100% vol., preferably 90% vol. to 100% vol.,
• a melting chamber (100) equipped with n burners (110) for the combustion of a fuel with thermal energy generation and a hot stream of smoke inside the chamber, with n ≥ 1, the melting chamber also comprising a smoke outlet (120) to evacuate from the chamber, the hot stream of smoke,
• a preheating installation comprising:
i. a first heat exchanger (210) for heating a stream of an intermediate oxidant by heat exchange with the hot stream of smoke, said intermediate oxidant comprising air provided by the air source (20), said first heat exchanger (210) having an inlet of hot stream of smoke in fluidic connection with the smoke outlet (120) of the melting chamber (100), an inlet of a stream of intermediate oxidant in fluidic connection with the air source and an outlet of a heated stream of intermediate oxidant, and
ii. a second heat exchanger (220) for preheating a stream of the rich oxidant by heat exchange with the heated stream of intermediate oxidant, the second heat exchanger having an inlet of the heated stream of intermediate oxidant in fluidic connection with the outlet of the heated stream of intermediate oxidant of the first heat exchanger (210), an inlet of the stream of rich oxidant to be preheated in fluidic connection with the rich oxidant (30) source, an outlet of a temperate stream of intermediate oxidant and an outlet of a preheated stream of rich oxidant,
the outlet of the preheated stream of the rich oxidant being in fluidic connection with a oxidizer inlet of n1 of the n burners (110), called first burners, with 1 ≤ n1 ≤ n,
the installation being **characterised in that**:
the outlet of the temperate stream of intermediate oxidant is in fluidic connection with an oxidizer inlet of n2 of the n burners (110), called second burners, with 1 ≤ n2 ≤ n.

9. Installation according to claim 8, wherein the rich oxidant source comprises a rich oxidant pipeline, a unit for separating gases from air or a rich oxidant tank.

10. Installation according to any one of claims 8 and 9, wherein the inlet of a stream of intermediate oxidant of the first heat exchanger is connected to the air source by an pipeline of intermediate oxidant to be heated, said pipeline of intermediate oxidant to be heated also being in fluidic connection with an oxygen source to enrich with oxygen the air provided by the air source upstream of the inlet of a stream of intermediate oxidant of the first heat exchanger, said oxygen source being preferably the rich oxidant source.

11. Installation according to any one of claims 8 to 10, wherein the outlet of the heated stream of intermediate oxidant of the first heat exchanger is connected to the inlet of the heated stream of intermediate oxidant of the second heat exchanger by a pipeline of heated intermediate oxidant, said pipeline of heated intermediate oxidant also being in fluidic connection with an oxygen source to enrich with oxygen of the heated stream of intermediate oxidant between the first and the second heat exchanger, said oxygen source being preferably the rich oxidant source.

12. Installation according to any one of claims 8 to 11, wherein the outlet of the temperate stream of intermediate oxidant of the second heat exchanger (220) is connected to an oxidizer inlet of the n2 second burners by a pipeline of temperate intermediate oxidant, said pipeline of temperate intermediate oxidant also being in fluidic connection with an oxygen source to enrich with oxygen, the temperate stream of intermediate oxidant upstream of the n2 second burners.

13. Installation according to any one of claims 8 to 12, wherein each burner (110) is one of the n1 first burners and/or one of the n2 second burners.

14. Installation according to any one of claims 8 to 13, wherein at least one of the n burners is a staged combustion-oxidant injection burner.

15. Use of an installation according to any one of claims 8 to 14, to implement a melting method according to any one of claims 1 to 7.
